(19) Europäisches Patentamt

European Patent Office

Office européen des brevets

(11) **EP 3 560 590 A1**

(12) # EUROPEAN PATENT APPLICATION
published in accordance with Art. 153(4) EPC

(43) Date of publication:
**30.10.2019 Bulletin 2019/44**

(21) Application number: **17889498.6**

(22) Date of filing: **21.12.2017**

(51) Int Cl.:
*B01J 37/02* (2006.01)      *B01D 53/86* (2006.01)
*B01J 27/13* (2006.01)      *B01J 27/138* (2006.01)
*B01J 37/08* (2006.01)      *B01J 37/18* (2006.01)

(86) International application number:
**PCT/JP2017/045857**

(87) International publication number:
**WO 2018/123787 (05.07.2018 Gazette 2018/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **26.12.2016 JP 2016251891**

(71) Applicant: **Clariant Catalysts (Japan) K.K.
Tokyo 113-0021 (JP)**

(72) Inventors:
• **KASAMA Yuuki
Yokkaichi-shi
Mie 512-1111 (JP)**

• **FUJII Wataru
Yokkaichi-shi
Mie 512-1111 (JP)**
• **KIM Hyun-Joong
Toyama-shi
Toyama 939-2753 (JP)**
• **YAMADA Kazuhiro
Toyama-shi
Toyama 939-2753 (JP)**

(74) Representative: **J A Kemp LLP
14 South Square
Gray's Inn
London WC1R 5JJ (GB)**

(54) **METHOD FOR MANUFACTURING LOW-TEMPERATURE OXIDATION CATALYST**

(57)     Provided is a method for manufacturing a catalyst that oxidatively decomposes ethylene, carbon monoxide, formaldehyde, etc., at high efficiency even at low temperatures, wherein discharge of harmful gases such as halogens during the manufacture is reduced. The problem is solved by a method for manufacturing a low-temperature oxidation catalyst including: (1) a step for causing a non-halogen-containing noble metal compound to be supported on a carrier; (2) a step for reducing the noble metal compound on the carrier obtained in step (1); (3) a step for causing a halide to be supported on the carrier obtained in step (2); and (4) a step for drying the carrier obtained in step (3) and obtaining a low-temperature oxidation catalyst.

[Figure 1]

Figure 1. LOADING AMOUNT OF HALOGEN AND ETHYLENE OXIDATIVE DECOMPOSITION RATE

EP 3 560 590 A1

**Description**

Technical Field

The present invention relates to a method for producing a catalyst having a high oxidation activity at a low temperature, in particular at 100°C or below.

Background Art

An oxidation catalyst exhibiting a high activity, without requiring a high temperature, at a low temperature of 100°C or below, in particular a temperature near or below room temperature, has been needed in many fields.

In the automotive field, as the hybridization of engines advances, the proportion of the resting state of the engine during driving becomes higher compared to conventional engines, and therefore, the temperature of exhaust gas declines readily and the concentrations of carbon monoxide and hydrocarbons, etc. in exhaust gas are likely to increase. Accordingly, a catalyst that can clean the exhaust gas at a lower temperature is required.

In the construction field, a catalyst that can detoxify a toxic gas such as formaldehyde released from construction materials into, for example, formic acid or carbon dioxide which has a higher safety, at near room temperature is required.

There is a high need for a catalyst that can detoxify carbon monoxide which is generated through incomplete combustion in gas water heaters for household use or in gas generating devices for fuel cells, by decreasing it to approximately 10 ppm or less at a low temperature and for detoxification.

Furthermore, also in general households, refrigerated storage is known as a method of storing fruits and vegetables. This is a method of keeping the humidity in the storage room high while keeping the temperature at, for example, about 5°C. However, even after harvesting, fruits and vegetables maintain their lives by performing respiration in which oxygen is incorporated and carbonic acid gas is released. Due to the respiration, ethylene gas, which is a hydrocarbon, is generated as a metabolic product. This ethylene gas, which is a maturation hormone, promotes ripening and aging of the fruits and vegetables, thereby leading to quality degradation of the fruits and vegetables, which in turn shortens the shelf life of the fruits and vegetables. In order to suppress such deteriorating effects caused by ethylene gas, a catalyst for controlling the concentration of ethylene gas in the storage room at 10 ppm or less, preferably 1 ppm or less, and further preferably 0.1 ppm or less is strongly required.

As a method of detoxifying such toxic gases, a method of oxidizing toxic gases utilizing oxygen in the air is known. Reactions for oxidation of the gases described above are expressed as the following formulae.

$$C_nH_{2n} + 1.5nO_2 \rightarrow nCO_2 + nH_2O \ ...... \qquad (1)$$

$$CH_2O + 1/2O_2 \rightarrow HCOOH \ ...... \qquad (2)$$

$$CH_2O + O_2 \rightarrow CO_2 + H_2O \ ...... \qquad (3)$$

$$CO + 1/2O_2 \rightarrow CO_2 \ ...... \qquad (4)$$

In order to perform these oxidation reactions using a simple device, it is preferable that the oxidation reaction proceeds at approximately 100°C or below, preferably at a near room temperature. In particular, for ethylene decomposition in a refrigerator or the like, a catalyst exhibiting a high activity at a low temperature of 5°C or below is needed.

As a highly active oxidation catalyst which can be used for the reaction of the formula (4) described above at a low temperature, a gold-loaded catalyst comprising nano-sized gold dispersed on an oxide carrier such as titania and iron oxide has been proposed (Patent Literature 1). This catalyst is rare because it exhibits activity even at a low temperature of 0°C or below, but a problem has been pointed out in that the stability of the catalyst is low, e.g. due to accumulation of carbonates. It has also been reported that, in a catalyst in which platinum and iron are supported on an aluminum carrier, an improved activity for oxidizing carbon monoxide is exhibited, but the reaction temperature therefor is 200°C, which is high (Patent Literature 2).

As a catalyst for oxidizing carbon monoxide at a low temperature, a catalyst comprising platinum and a mesoporous carrier such as mesoporous silica, said platinum being supported on said carrier, is disclosed in Patent Literature 3. Non-Patent Literature 1 shows that a catalyst comprising platinum and an oxide carrier such as mesoporous silica, said platinum being supported on the carrier, exhibits a high ethylene oxidation performance at near room temperature. Such catalysts comprising platinum (or the like) and an inorganic oxide carrier such as silica, said platinum being supported on said carrier, have been known to exhibit a high activity for both ethylene and carbon monoxide. Since the principle of the detoxification of these gases is an oxidation reaction, the efficacy of the catalysts is expected to be applicable to a wide range of applications, including decomposing treatments not only for hydrocarbons such as ethylene, but also for other volatile organic compounds (VOCs) such as formaldehyde, and for example, Patent Literature 4 shows a platinum catalyst effective in oxidative decomposition of VOCs, in particular of formaldehyde.

As mentioned above, the catalysts comprising a noble metal such as platinum supported on an inorganic oxide carrier, shown in Patent Literature 3 and Non-Patent Literature 1, have an important characteristic in that they have a high activity for both VOCs, such as hydrocarbon gases, and carbon monoxide but, in the meantime, there are also many problems to be solved. For example, in Patent Literature 3 and Non-Patent Literature 1, a hydrochloric acid aqueous solution of chloroplatinic acid is used as a raw material of platinum which is a catalyst, and therefore, taking measures against chlorine generated upon the production of the catalyst is needed.

A hydrochloric acid solution of chloroplatinic acid includes a large amount of hydrogen chloride, and thus, in the production process of the catalysts, halogen generated from the hydrogen chloride upon sintering and hydrogen reduction after loading of chloroplatinic acid, presents a large problem. That is, due to the high temperature treatment, a large amount of halogen is discharged and corrodes a catalyst production apparatus, thereby deteriorating said apparatus. In addition, the corrosion may be mixed into the catalyst, causing a decrease of the catalytic performance. This also tends to be the cause of apparatus failures. Moreover, the halogen gas risks causing environmental contamination in the production site or factory surroundings, and thus, a catalyst produced using a halogen-free platinum source is strongly desired.

The phenomenon described above applies to, not only platinum, but also other noble metals such as gold and palladium. In order to obtain a low temperature oxidation catalyst, it is common to use a hydrochloric acid solution of the respective noble metal halides. This is because halide salts of noble metals and halogen complexes of noble metals are readily dissolved in hydrochloric acid. Therefore, when catalysts are produced using noble metals, it is inevitable that a large amount halogen will be generated during the catalyst production step, and the corrosion of the apparatus, etc. due to the halogen presents a large problem.

As a halogen-free source (precursor) of platinum, dinitrodiammine platinum is well known. Since this raw material does not include hydrogen chloride, problems such as corrosion of the production apparatus described above can in principle be avoided. However, as shown in Examples described later, when dinitrodiammine platinum is used as a raw material for preparing a low temperature oxidation catalyst, which is an object of the present invention, the catalytic activity thereof decreases significantly. Accordingly, no catalyst has been obtained that oxidatively decomposes a low temperature substance with high efficiency through a method replacing chloroplatinic acid.

As mentioned above, there are needs for a catalyst that has a high activity for oxidation of ethylene generated from fruits and vegetables, etc., that also generates a smaller amount of toxic gases upon production, and that can be produced with low costs, but it is still not possible to provide such a catalyst. Furthermore, the fact is that similar problems are also present in the oxidation catalysts for carbon monoxide and in the catalysts used against formaldehyde, shown in the other literatures. The explanation described above only takes up the case of gas as low temperature substances, but the substance to be oxidized in the present invention is not limited to gas and solid, liquid and gaseous states may each be contemplated. For example, if ethyl alcohol or benzene can be oxidized at a low temperature with high efficiency, heat generated therefrom can be utilized for disposable heat pads or other applications.

Citation List

Patent Literature

    Patent Literature 1: JPH0557192A
    Patent Literature 2: JP2003164764A
    Patent Literature 3: JP2009061372A
    Patent Literature 4: JP4062053B

Non Patent Literature

Non Patent Literature 1: Angew. Chem. Int. Ed. 2013, 52, 6253-6268

Summary of Invention

Technical Problem

Considering the circumstances described above, it is an object of the present invention to provide a method for producing a catalyst that, during the production step of the catalyst, causes little concern for corrosion of the production apparatus, and has a low risk of releasing halogen to the surrounding environment, and further has a high oxidation activity at a low temperature.

The first object of the present invention is to provide a method for producing a catalyst material that can decompose, with high efficiency, volatile organic gases, for example, ethylene gas generated from fruits and vegetables, etc. that have been cold-stored.

The second object of the present invention is to provide a method for producing a catalyst that can oxidize, with high efficiency, carbon monoxide emitted from automobile exhaust gas or numerous other emission sources, at a low temperature of, for example, 100°C or below.

Another object of the present invention is to provide a method for producing a highly active oxidation catalyst for low temperature substances, while achieving reduced discharge of toxic halogen gases in the production process for the catalyst, by using a halogen-free platinum precursor.

Another object of the present invention is to provide a method for producing such a catalyst without using a raw material of noble metal in the form of a hydrochloric acid solution, which enables the production of the catalyst with a high safety during operation.

Yet another object of the present invention is to provide a method for producing an inexpensive, highly active, low temperature oxidation catalyst that does not require an auxiliary device such as a light source for a photocatalyst.

Other objects of the present invention will become apparent from the description below.

Solution to Problem

In view of the above-described actual circumstances, the present inventors conducted diligent research, mainly on the improvement of the ethylene decomposition performance, to solve the drawbacks of the conventional art, and consequently obtained the following findings and guiding principles as ideas for solving the problems.

(1) As an active metal for obtaining a high ethylene decomposing activity, noble metals were chosen, and among them, platinum was particularly chosen as a highly active metal. Then, a precursor replacing chloroplatinic acid that results in a smaller amount of halogen gas upon production of the catalyst was searched for. As a result, it was anticipated that the use of dinitrodiammine platinum would be preferable for reducing the generation of halogen gas in the production process.

(2) However, when a catalyst was actually produced using dinitrodiammine platinum and a silica carrier by loading the former onto the latter, its ethylene decomposing activity was extremely low compared to the case of using chloroplatinic acid, although the generation of halogen could be suppressed.

(3) As a result of discussing the reason why the catalyst using dinitrodiammine platinum as a raw material has a low activity, the cause of the above was assumed to be that almost no halogen is contained in the raw material and solvent used therefor. Then, in an experiment seeking to support said assumption, dinitrodiammine platinum was loaded onto a carrier, and then hydrochloric acid was sprayed onto the resultant, followed by heat-drying, whereupon it was found that the oxidation activity was significantly improved.

(4) From the above, it was found that halogen has a promoting effect for oxidation reactions, but it was also discovered that the performance of the catalyst obtained after the treatment with the hydrochloric acid aqueous solution varies depending on the conditions of the hydrochloric acid treatment, and that an improvement in view of stable production is possible.

(5) Although the cause of the variation in the catalytic performance due to the hydrochloric acid treatment is not clear, it was assumed that, when hydrochloric acid is sprayed onto the platinum-supported catalyst, a part of it is adsorbed on the surface of the platinum, but since hydrogen chloride itself is gaseous at ordinary temperature, a large proportion of it is volatilized as the solvent (water) is dried, and thus the amount of hydrogen chloride that can be adsorbed on the surface of platinum varies readily.

(6) Then, a method for steadily achieving a high activity while using dinitrodiammine platinum as a raw material was searched for, and it was found that, when loading a halide of a metal other than noble metals, instead of hydrochloric acid, onto a carrier, the resulting catalyst has an improved activity, and stable performance.

(7) In other words, it was discovered that, when platinum is loaded onto a carrier by using a solution of dinitrodiammine platinum, followed by further loading of a halide of a metal other than noble metals, the activity is significantly improved.

(8) As a metal in the halide, preferable are alkali metals such as Li, Na and K; alkaline earth metals such as Ca and Mg; transition metals such as Fe and Co; and Group XIII metals such as Al.

(9) The catalyst obtained through the idea described above exhibits a high activity for a low temperature oxidative decomposition reaction of ethylene. In addition, when the catalyst was applied to oxidation of carbon monoxide or formaldehyde, a high catalytic performance was exhibited in a similar manner to the case of ethylene.

(10) The aforementioned method of producing the catalyst is preferable in view of safety during operation because it is not required to use a hydrochloric acid solution in contrast to the case of using chloroplatinic acid. Moreover, applying an aqueous solution of a metal halide salt with a predetermined concentration enables treatment with a minimum necessary amount of halogen solution, and therefore, an excessive discharge of halogen can be prevented. In addition, since the metal halide salt is stable, it does not generate toxic halogen upon drying or the like after loading steps, and has an advantage of high safety.

(11) The catalyst thus obtained does not require a high cost production apparatus and also provides a high production stability, and therefore, it is suitable for applications such as household refrigerators from the viewpoint of production costs, thereby achieving the objects of the present invention.

Accordingly, the present invention relates to the following:

1. A method for producing a low temperature oxidation catalyst, comprising steps of:

(1) loading a noble metal compound not containing halogen onto a carrier;
(2) reducing the noble metal compound on the carrier obtained in step (1);
(3) loading a halide onto the carrier obtained in step (2); and
(4) drying the carrier obtained in step (3) to obtain the low temperature oxidation catalyst.

2. The method according to item 1 above, wherein, in step (1), the noble metal compound not containing halogen is loaded onto the carrier by impregnating the carrier with a solution of the noble metal compound not containing halogen and then drying the resulting carrier.

3. The method according to item 1 or 2 above, wherein, in step (3), the halide is further loaded onto the carrier obtained in step (2), by treating said carrier with a solution of the halide.

4. The method according to item 3 above, wherein, in step (3), the halide is further loaded onto the carrier obtained in step (2), by spray-coating said carrier with a solution of the halide.

5. The method according to any one of items 1 to 4 above, wherein the noble metal is at least one element selected from the group consisting of platinum, gold, palladium, ruthenium, rhodium and iridium.

6. The method according to any one of items 1 to 4 above, wherein the noble metal compound not containing halogen in step (1) is dinitrodiammine platinum.

7. The method according to any one of items 1 to 6 above, wherein the halogen in the halide is chlorine.

8. The method according to any one of items 3 to 7 above, wherein the solution of the halide is an aqueous solution of hydrogen chloride.

9. The method according to any one of items 3 to 7 above, wherein the solution of the halide is a solution of a chloride of a metal other than noble metals.

10. The method according to item 9 above, wherein the metal chloride is one or more metal chlorides selected from the group consisting of alkali metal chlorides, alkaline earth metal chlorides, transition metal chlorides and chlorides of Group XIII elements except boron.

11. The method according to item 10 above, wherein a metal in the metal chloride is one or more elements selected from the group consisting of calcium, magnesium, iron and aluminum.

12. The method according to any one of items 1 to 11 above, further comprising, between steps (1) and (2), a step of:
(1-a) heating the carrier comprising the noble metal compound not containing halogen supported on said carrier.

13. The method according to any one of items 1 to 12 above, wherein the reduction in step (2) is hydrogen reduction.

14. The method according to any one of items 1 to 13 above, wherein, as the carrier, a silica-containing carrier, the silica content of which is 70% by weight or more based on the total weight of the carrier, is used.

15. The method according to item 14 above, wherein the carrier has a specific surface area of 300 $m^2$/g to 2000 $m^2$/g.

16. The method according to item 14 or 15 above, wherein the carrier comprises silica produced by sol-gel method.

17. The method according to any one of items 14 to 16 above, wherein the carrier comprises silica gel or mesoporous silica.

18. The method according to any one of items 1 to 17 above, wherein the loading amount of the noble metal is 0.1 to 5% by weight based on the content of the noble metal element, relative to the total weight of the carrier and the noble metal.

19. The method according to any one of items 1 to 18 above, wherein the loading amount of the halide is 0.02% by weight or more based on the content of the halogen element, relative to the total weight of the carrier and the noble metal.

20. The method according to any one of items 2 to 19 above, wherein, in step (1), 0.1 to 5% by weight of the noble metal compound based on the content of the noble metal element, relative to the total weight of the carrier and the noble metal, is loaded onto the carrier by impregnating the carrier with a solution containing the noble metal compound at a concentration of 0.05 to 10% by weight based on the content of the noble metal element.

21. The method according to any one of items 3 to 20 above, wherein, in step (3), 0.02% by weight or more of halogen based on the content of the halogen element, relative to the total weight of the carrier and the noble metal, is loaded onto the carrier obtained in step (2) by spray-coating said carrier with a solution containing the halide at a concentration of 0.1 to 5% by weight based on the content of the halogen element.

In addition, the present invention can also encompass the following embodiment:
1'. A method for producing a low temperature oxidation catalyst, comprising steps of:

(1) loading a noble metal compound not containing halogen onto a carrier;
(2) reducing the noble metal compound on the carrier obtained in step (1);
(3) loading a halide onto the carrier, obtained in step (2), comprising the noble metal supported on said carrier; and
(4) drying the carrier, obtained in step (3), comprising the noble metal and the halide supported on said carrier to obtain the low temperature oxidation catalyst.

Advantageous Effects of Invention

As can be understood from the above, in the method of the present invention, a highly active oxidation catalyst for low temperature substances can be obtained by using halogen-free dinitrodiammine platinum which is excellent in environmental safety, without using a halide of a noble metal such as chloroplatinic acid.

By using dinitrodiammine platinum not containing halogen, catalysts can be produced with a low-cost production apparatus, without using an expensive production apparatus that is resistant to halogen corrosion. Moreover, the halogen gas discharged can be collected and treated with a low burden, thereby enabling production with low costs.

Furthermore, due to the halogen supported on the catalyst, a high activity can be obtained even if the amount of platinum is small, and therefore, the present invention can also contribute to reduction in the amount of noble metals used, where noble metal resources are scarce.

Brief Description of Drawing

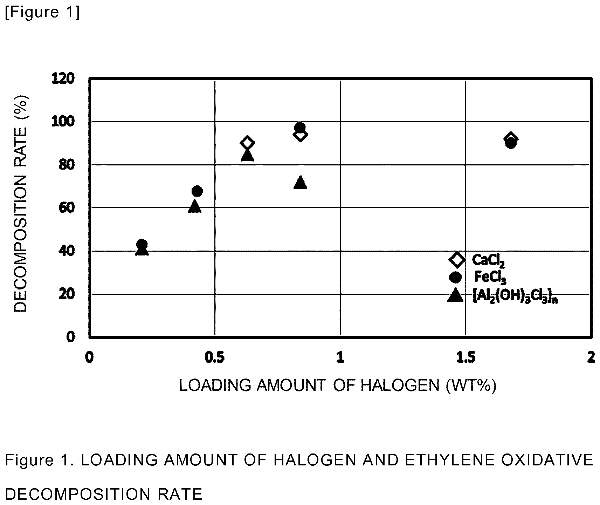

Figure 1 is a graph showing the relationship between the loading amount of chlorine and the ethylene oxidative decomposition rate.

[Description of Embodiments]

The present invention is a method for producing an oxidation catalyst for a low temperature substance, comprising a carrier, e.g. metal oxide carrier and, in addition to the carrier, at least a noble metal and halogen which are supported on said carrier. The noble metal described above is preferably selected from the group consisting of platinum, gold, palladium, ruthenium, rhodium and iridium, more preferably platinum, ruthenium or gold, and in particular, platinum. In addition, as mentioned before, for the low temperature substance, solid, liquid and gaseous states may each be contemplated, but hereinafter, in order to simplify the description, mainly embodiments where the substance to be oxidized is gaseous, and principally, the noble metal is platinum, halogen is chlorine, and the low temperature substance to be oxidized is ethylene, will be described in detail. Embodiments for other low temperature gases, etc. will also be described within a necessary range. These descriptions are applicable to other embodiments, and persons skilled in the art will also be able to appropriately understand other embodiments by referring to these descriptions.

As described above, the low temperature oxidation catalyst prepared in the present invention comprises a carrier (preferably a metal oxide carrier), a noble metal, halogen (a halogen element and/or a halide) and optionally hydrogen (H) or a metal other than noble metals, and preferably, the oxidation catalyst described above is composed of a porous body having a metal oxide framework as a carrier, a noble metal, halogen (a halogen element and/or a halide) and optionally H or a metal other than noble metals. Examples of the halide include hydrogen chloride and a halide of a metal other than noble metals (hereinafter, the halide of a metal other than noble metals is also simply referred to as a "metal halide"). The noble metal and the halogen (optionally, as well as H or a metal other than noble metals) are supported on the carrier described above, and particularly preferably, the noble metal is present inside the pores of the carrier in the particulate form, particularly in the form of noble metal particles having a nano-order particle size.

The carrier, preferably the oxide carrier, for supporting the noble metal may be e.g. an inorganic oxide that has been conventionally employed as a catalyst carrier. Specific examples of the carrier include oxides of metals such as aluminum, zirconium, silicon, titanium, tin, barium and zinc, or composite oxides of these metals. Among these, considering the availability, cost, oxidation activity for oxidation reactions and the like, alumina ($Al_2O_3$), zirconia ($ZrO_2$), silica ($SiO_2$) or titania ($TiO_2$) is suitable, and a silica-containing carrier, for example, a carrier comprising silica as its main component, is particularly preferable in the present invention.

The shape, size, etc. of the oxide carrier are not particularly limited as long as the catalytic metal can be supported thereon, and for example, those with various shapes such as powder, granulated materials and molded materials can be employed. For example, carriers having an average particle size of 1 to 300 $\mu$m, preferably 3 to 100 $\mu$m, and particularly preferably 4 to 80 $\mu$m, for example 5 to 70 $\mu$m, can be used. The oxide carrier may be in an arbitrary form such as compacts and porous bodies. Preferably, the carrier is a porous carrier, for example, a mesoporous body having mesopores.

When the carrier described above is a porous body, the pore diameter of the porous body is preferably 1 nm to 20 nm and more preferably 2.5 nm to 10 nm. When the pore diameter is less than 1 nm, the size of pores is often smaller than the size of platinum particles to be adsorbed, and such a pore diameter makes it difficult for the platinum particles to be adsorbed inside the pores. On the other hand, when the pore diameter is greater than 20 nm, there is a concern that platinum particles become larger, thereby reducing their specific surface areas, and barely exerting a sufficient catalytic activity.

The carrier described above preferably have a specific surface area of 100 to 3000 $m^2$/g, and more preferably, have a specific surface area of 300 to 2000 $m^2$/g, for example, 500 to 1500 $m^2$/g. Carriers having a specific surface area within the range as described above have a great mechanical strength and exhibit a satisfactory oxidation activity.

In addition, the carrier described above can have a pore volume of, for example, 0.1 to 1.5 $cm^3$/g, and preferably 0.5 to 1 $cm^3$/g.

The pore diameter can be determined in accordance with JIS 8831-2 as the mode diameter of the differential pore volume distribution according to BJH method (based on adsorption of nitrogen gas under a liquid nitrogen temperature).

The specific surface area can be measured in accordance with JIS 8830 via BET (multipoint) method (based on adsorption of nitrogen gas under a liquid nitrogen temperature).

For the measurements, a commercially available constant volume gas adsorption measurement instrument (for example, BELSORP-minill type from MicrotracBEL Corp.) can be employed. The pore diameter and the specific surface area can be determined by retaining a sample under vacuum at 200°C or above for 2 hours as a pretreatment, and performing measurement on the sample after the pretreatment.

Furthermore, the pore volume can be measured via $\alpha$s analysis of the results from nitrogen adsorption measurement, and the average particle size can be measured via a dry-type particle size distribution measurement for example, by employing Beckman Coulter LS13 320.

The carrier, preferably the oxide carrier, may comprise a promoter component in order to enhance the oxidation activity in oxidation reactions. Examples of such a promoter component include transition metals such as iron, ruthenium, cerium, cobalt, copper, nickel and manganese.

According to the present invention, in one embodiment of the present invention, a carrier containing silica (preferably, a silica-based carrier) can be used as a carrier. As a silica-containing carrier, the so-called $SiO_2$, and oxides containing other metals such as Al, for example, zeolite, can also be used. However, in view of the activity, those containing 70% or more of $SiO_2$ are preferable, and for example, carriers containing 75% or more of $SiO_2$ are particularly preferable. In one preferred embodiment of the present invention, the carrier comprises 75 to 100% of $SiO_2$, and for example, it can also be substantially composed of silica only (that is, a silica carrier).

Methods of producing silica used for the carrier in the present invention are broadly divided into 2 types: wet method and dry method and, although either one can be used, the wet method is particularly preferable for the present invention. Examples of silica obtained by wet method generally include sol-gel silica, precipitated silica and dry silica, and any of these can be used, but sol-gel silica is particularly preferable among them.

For example, as silica obtained by sol-gel method, mesoporous silica can be used. Mesoporous silica herein means a substance made of silica (silicon dioxide) with uniform and regular pores (mesopores: diameter of approximately 2 nm to 50 nm). For example, the mesoporous silica shown in Non-Patent Literature 1 (for example, trade name: TMPS from Taiyo Kagaku Co., Ltd.) can be used. This silica is particularly used suitably because it has a large specific surface area, which is preferable for improvement in the activity.

In addition, as other silica obtained by sol-gel method, silica gel can also be used suitably. Silica gel herein refers to a product obtained by dehydrating and drying a silicic acid gel obtained by hydrolysis of acid components generated by leaving an aqueous solution of sodium metasilicate ($Na_2SiO_3$) as is. As such silica gel, type B silica gel having a specific surface area of approximately 300 to 2000 $m^2$/g is preferable. This is because said type B silica gel has a great mechanical strength due to its appropriate specific surface area, and also gives a high activity.

Both mesoporous silica and silica gel as described above have a $SiO_2$ content within the preferable range described above, and can be used suitably in the present invention.

Carriers that can be used in the present invention can be produced by production methods that have been conventionally known with respect to carriers for catalysts, and for example, can be produced by the method as described in Patent Literature 3. Alternatively, commercially available carriers (for example, trade name: TMPS from Taiyo Kagaku Co., Ltd. described above) can also be used in the present invention.

With respect to platinum to be supported on the carrier, a platinum precursor (that is, platinum source as a raw material to be supported on the carrier, typically a platinum compound) is preferably a raw material not containing halogen. The reason for this is that, as mentioned before, discharge of halogen gases generated from the precursor or solution thereof during the heat treatment such as heating and sintering after loading platinum onto the carrier is suppressed. As such a platinum precursor not containing halogen, for example, diammine and tetraammine platinum compounds such as dinitrodiammine platinum $[Pt(NH_3)_2(NO_2)_2]$, tetraammineplatinum hydroxide $[Pt(NH_3)_4](OH)_2$, tetraammineplatinum nitrite $[Pt(NH_3)_4](NO_2)_2$, tetraammineplatinum nitrate $[Pt(NH_3)_4](NO_3)_2$ and tetraammineplatinum bicarbonate $[Pt(NH_3)_4](HCO_3)_2$; platinum diketonates such as platinum(II) 2,4-pentanedionate $Pt(C_5H_7O_2)_2$; platinum nitrates such as hexahydroxoplatinic(IV) acid $H_2Pt(OH)_6$ acidified with nitric acid; other platinum salts such as platinum sulfite and platinum oxalate; and platinum salts including other N donor ligands such as $[Pt(CN)_6]^{2-}$ can be used, and in particular, dinitrodiammine platinum (DNDA-Pt) is preferable. DNDA-Pt is typically supplied as a nitric acid solution.

When gold is used instead of platinum, examples of its precursor include Au thiol acid, Au carboxylic acid such as Au acetate acid $Au(O_2CCH_3)_3$; aminoorgano gold carboxylates such as imidazole gold ethylhexanoate; mixed gold carboxylates such as gold hydroxide acetate isobutyrate; Au thiocarboxylates and Au-dithiocarboxylatese.

Moreover, when ruthenium is used instead of platinum, its precursor is appropriately selected and used among compounds such as the acetylacetonate complexes; ruthenium carbonyl complexes such as $Ru(CO)_5$ and $Ru_3(CO)_{12}$; ruthenium organic acid salts such as $[Ru_3O(OCOCH_3)_6(H_2O)_3]OCOCH_3$ hydrate; ruthenium nitrosyl complexes such as $K_2[RuCl_5NO)]$, $[Ru(OH)(NH_3)_4(NO)](NO_3)_2$ and $Ru(NO)(NO_3)_3$; and ruthenium phosphine complexes.

Furthermore, when rhodium is used instead of platinum, as its precursor, rhodium nitrate, rhodium acetylacetonate or the like can be used, and when palladium is used, as its precursor, inorganic compounds such as palladium(II) nitrate $[Pd(NO_3)_2]$, or tetraamminepalladium(II) nitrate $[Pd(NH_3)_4](NO_3)_2$ or $Pd(NH_3)_2(OH)_2$, or organic Pd compounds such as Pd carboxylates can be used, and furthermore, when iridium is used, its precursor is selected and used from inorganic and organic compounds of iridium in a similar way.

In the present invention, a platinum precursor as described above (typically, a platinum compound not containing halogen) is used to load platinum onto the carrier. There is no particular limitation on the method of loading platinum onto the oxide carrier, and known preparation methods such as impregnation and deposition-precipitation can be appropriately applied. For example, in the case of loading platinum onto an oxide carrier by impregnation, first, a platinum precursor (for example, in the form of a solution of DNDA-Pt in nitric acid or an aqueous solution of DNDA-Pt) whose concentration and liquid volume have been adjusted such that the amount of platinum supported on the carrier will be a predetermined amount is provided. Next, this platinum precursor, the oxide carrier, a solvent such as water and, if necessary, a surfactant and/or a promoter component, are charged in a container, and stirred and mixed e.g. for 10 minutes to 10 hours at room temperature. For example, the stirring can be performed with a stirring device equipped with a stirring vane, or a small-scale cement mixer. Next, the solvent is removed by e.g. heating to dry the mixture. For example, the drying can be performed at a temperature of 70 to 130°C, preferably 90 to 110°C for 30 minutes to 5 hours, preferably for 1 to 3 hours. At this time, platinum compounds are supported on the oxide carrier, and in particular, platinum compounds, platinum ion and platinum complexes are dispersed. Next, the dried mixture is sintered in an oxidizing atmosphere, and then subjected to reduction treatment. It is also possible to subject the mixture to the reduction treatment without performing the drying or the sintering in an oxidizing atmosphere described above in order to simplify the process. Upon loading the noble metal onto the carrier, organic solvents such as alcohol can also be used, instead of water, to dissolve the noble metal compound therein, depending on the properties of the noble metal precursor. For example, a mixed solvent of water and ethanol, etc. can be appropriately used.

Examples of the oxidizing atmosphere include air, oxygen gas, argon gas-containing oxygen gas and nitrogen gas-containing oxygen gas, etc.. The sintering in an oxidizing atmosphere can be, for example, performed under ordinary pressure at a temperature of 100 to 800°C, preferably 150 to 600°C, more preferably 200°C to 500°C, and further preferably 250 to 450°C. The sintering time can be, for example, 1 to 20 hours, and preferably 2 to 10 hours, and more preferably e.g. 3 to 7 hours. Due to this sintering, platinum compounds on the carrier are normally oxidized into platinum oxides. However, in the case where sintering is performed at a high temperature of, for example, about 530°C or above, platinum compounds on the carrier are converted into platinum metal. That is, this sintering can be a step of obtaining noble metal oxides from noble metal compounds, or, depending on the circumstances, it can be a thermal decomposition step for noble metal compounds (in the latter case, a noble metal in the form of metal is obtained).

The mixture described above or, in the case where the mixture is subjected to drying or sintering, the resultant after that, is subjected to reduction. The noble metal compounds on the carrier can be reduced by the reduction treatment. In the case where sintering is performed prior to the reduction, the noble metal compounds on the carrier are generally in the form of noble metal oxides, as mentioned above. Accordingly, using the reduction treatment, the noble metal oxides on the carrier can be reduced to the noble metal in the form of metal. In addition, when sintering is performed at a high temperature as mentioned above, noble metal compounds that may remain even after sintering can be reduced to the noble metal in the form of metal by the reduction treatment. The reduction treatment can be, for example, performed by heating to a temperature of 100 to 400°C, preferably 150 to 250°C for 30 minutes to 5 hours, preferably for 1 to 3 hours, in a reducing atmosphere under ordinary pressure or pressurization. Examples of the reducing atmosphere include hydrogen gas, argon gas-containing hydrogen gas, nitrogen gas-containing hydrogen gas and nitrogen gas etc.. For example, the reduction treatment can also be performed under a hydrogen gas pressure of 0.05 to 15.0 MPa, more preferably 0.1 to 10.0 MPa. Reduction can also be performed under a nitrogen atmosphere, and in this case, ammine ligands or the like in a platinum precursor are decomposed and removed by heating in nitrogen gas, and platinum is reduced to metal.

As described above, after soaking the silica-containing carrier in the platinum precursor (for example, an aqueous solution of DNDA-Pt), drying and/or heating (sintering) in the air, etc. are performed as necessary, followed by further heating and reduction (preferably in the gaseous phase and more preferably in a hydrogen gas stream). During this sintering step and the following reduction step, it is believed that, while nitro groups or the like are eliminated, platinum metal is formed into fine particles, thereby improving the catalytic activity. Preferably, the fine particles of platinum metal can have an average particle size of less than 2.5 nm, for example, 0.5 to 2 nm. The average particle size can be determined by transmission electron microscopy.

The loading amount of platinum is appropriately set depending on e.g. the reaction type, and the specific surface area and shape of the oxide carrier. For example, the amount of platinum is set within a range of 0.01 to 15% by weight, preferably 0.1 to 5% by weight, and more preferably 0.2 to 3% by weight, based on the total weight of the carrier (carrier before platinum is loaded thereon) and platinum. When the loading amount of platinum is within such a range, a particularly excellent oxidation activity can be achieved in a low temperature region in the oxidation reaction of hydrocarbons or carbon monoxide.

The loading amount of platinum can be determined by ICP method (high-frequency inductively coupled plasma emission spectrometry).

In the catalyst production process mentioned above, it is not necessary to use, in the platinum source, halogen such as a high concentration hydrochloric acid solution. When chloroplatinic acid is used in a conventional manner, it is necessary to load platinum onto the carrier, e.g. by spraying a solution thereof, and then to perform drying, sintering and furthermore hydrogen reduction, etc. but, during the sintering and reduction process, a large amount of hydrochloric acid is volatilized, and this readily causes corrosion of the reaction apparatus or the like. On the contrary, in the present invention, it is only required to load a raw material of platinum (for example, a platinum compound such as dinitrodiammine platinum) not containing halogen onto the carrier, and then to load halogen (a halogen element or a halide of a metal other than noble metals) only in a necessary amount, and therefore, the amount of halogen to be used can be small. In addition, since the halogen (the halogen element and/or the metal halide) is loaded after the sintering of platinum, the temperature for the subsequent heating can be low and a rapid volatilization of halogen is rarely involved, enabling production of the catalysts with a high safety.

According to the method above, platinum is dispersed and supported on the carrier, preferably the oxide carrier. Subsequently, loading of halogen (a halogen element and/or a metal halide) is conducted. As a method of loading the halide of a metal other than noble metals, any of wet method and dry method can be used, but the wet method in which a solution (for example, aqueous solution) of the halide of a metal other than noble metals is loaded is particularly preferable. Types of the metal halide are not particularly limited as long as it is a halide of a metal other than noble metals, but considering the availability, cost, safety, etc., a halide (for example, chloride) of a metal selected from the group consisting of alkali metals, alkaline earth metals, transition metals and Group XIII elements in the periodic table is preferable.

Examples of the alkali metals used in the present invention include Li, K, Na and Rb, examples of the alkaline earth metals include Mg, Ca and Ba, and examples of the transition metals include Fe, Ti, Co, V, Mn, Ni and Cu. In addition, examples of the Group XIII metals include Al.

Moreover, as the halogen in the metal halide in the present invention, in view of safety, any of chlorine, bromine or iodine is preferable, and chlorine is particularly preferable.

Particularly preferable examples of the metal halide in the present invention include calcium chloride, magnesium chloride, iron chloride (ferrous chloride and ferric chloride), aluminum chloride and polyaluminum chloride.

The loading amount of the halogen in the present invention is, when calculated based on the content of the halogen alone, preferably 0.01% by weight or more and more preferably 0.02% by weight or more, relative to the total weight of the carrier and the noble metal. The upper limit of the loading amount of the halogen is not particularly limited, but it is preferably 15% by weight or less, preferably 8% by weight or less, and further preferably 3% by weight or less, based on the total weight of the carrier and the noble metal. For example, the loading amount of the halogen can be, based on the content of the halogen element, 0.01 to 15% by weight, more preferably 0.1 to 8% by weight, further preferably 0.2 to 5% by weight, and even more preferably 0.3 to 3% by weight, for example, 0.4 to 2% by weight or 0.5 to 1.8% by weight, relative to the total weight of the carrier and the noble metal. In addition, in one embodiment of the present invention, the molar ratio of the loading amounts of platinum and the halogen (platinum/halogen) is 0.01 to 1000, preferably 0.05 to 500, and more preferably 0.1 to 300. For example, the molar ratio can be preferably 0.01 to 10, for example, 0.05 to 5, 0.08 to 2, 0.1 to 1.5 or 0.1 to 1. When the amount of halogen is lower than the range described above, there is a concern that the activity is decreased and, when it is greater than the range described above, there is a concern that the activity is similarly decreased, e.g. due to precipitation of large crystals of the metal halide.

As previously mentioned, the activity of the catalyst according to the present invention is improved by the halogen supported thereon. The amount of the halogen (based on the content of the halogen element) supported on the catalyst in the present invention is measured quantitatively by ion chromatography using samples obtained after the extraction with water. Under conditions for the measurement, the extraction is performed by soaking 0.5 g of the catalyst in 50 ml of pure water at 20°C and subjecting it to ultrasonic treatment for 5 minutes.

The molar ratio described above can be calculated from the loading amount of platinum and the loading amount of halogen.

The halogen loading treatment in the present invention can also be performed with hydrogen chloride aqueous solution without using the metal halide mentioned above. As shown in Examples below, while the treatment with a solution of hydrogen chloride (hydrochloric acid) can exhibit an extremely high activity for oxidation reactions, its performance tends to be unstable. The reason behind this is not clear, but it is assumed to be attributable to the fact that hydrogen chloride is likely to be volatilized as water gets dried after the treatment with the hydrogen chloride aqueous solution, and thus, the amount of chlorine supported on the catalyst varies readily, as does the catalytic performance. Moreover, since hydrogen chloride is a strong acid, there is a concern from the viewpoint of safety during operation. Thus, there may be a case where it is preferable to use a halide salt of a metal, rather than hydrogen chloride aqueous solution.

For example, loading the hydrogen chloride and/or the metal halide can be performed by subjecting the catalyst on which platinum has been supported to treatment with an aqueous solution of hydrogen chloride and/or the metal halide. The treatment described above is preferably performed such that the loading amount of halogen is equivalent to or greater than the loading amount of platinum (molar ratio). For example, the carrier onto which platinum has been loaded and which has been subjected to reduction treatment may be, for example, spray-coated with an aqueous solution of the halide (for example, an aqueous solution of hydrochloric acid or an aqueous solution of the metal halide) at room temperature and then heat-dried, or said carrier may be soaked in the solution described above, then taken out from the solution and heat-dried. Due to the heat-drying, while moisture is evaporated, the halide is made supported on the carrier, providing the oxidation catalyst described above.

Spray coating can be performed by, e.g. spraying an aqueous solution of the halide from a sprayer to the carrier comprising the noble metal supported thereon, while rotating the carrier in a rotating container such as a cement mixer. Spraying conditions vary depending on the desired throughput. For example, the spraying can be performed under conditions where the mixer rotational speed is 1 to 5 rpm such as 2 rpm and the spray pressure is 0.1 to 0.5 Mpa such as 0.3 Mpa. For example, in the present invention, 0.01% by weight or more, preferably 0.02% by weight or more of the halide, for example, 0.01 to 15% by weight, preferably 0.1 to 8% by weight, more preferably 0.2 to 5% by weight, and further preferably 0.3 to 3% by weight, for example, 0.4 to 2% by weight or 0.5 to 1.8% by weight of the halide, based on the content of the halogen element, can be applied onto the carrier, relative to the total weight of the carrier and the noble metal.

In the present invention, it has been found that, when loading the halide onto the carrier by spray coating method, the noble metal is particularly likely to be attached steadily to the carrier, compared to the case of using soaking method in which an outflow of the noble metal tends to occur. In particular, even when a silica-based carrier is used as the carrier, the noble metal can, upon loading of the halide onto the carrier, remain steadily attached to the carrier, without flowing out of the carrier. Accordingly, the spray coating method may be advantageous.

With respect to the heat-drying described above, for example, drying can be performed at a temperature of 80 to 150°C, preferably 90 to 130°C such as 100 to 120°C for 1 to 15 hours, preferably 3 to 12 hours such as 5 to 10 hours.

Assuming the reason why the ethylene decomposition activity is improved by loading the halide onto the catalyst, it is considered that halogen acts effectively. This is because effect of improving the activity is also observed when the catalyst is treated with hydrogen chloride aqueous solution. However, there are many unclear points in the mechanisms of how halogen is supported on the catalyst and how it assists in oxidation reactions (for example, ethylene decomposition), and they are still conjectural. Hazarding a guess, it is believed that halogen, for example chlorine, is chemically adsorbed or physically adsorbed to platinum particles, thereby changing the acidity of the surface of platinum and improving the oxidation reaction rate (for example, ethylene decomposition rate). Especially in the case of the metal halides, it is assumed that, since halogen is supported in the form of a stable salt such as a calcium salt, the amount of halogen required as the catalyst is maintained and supplied upon the oxidation reaction.

In Comparative Example 3 shown later, a phenomenon is observed in that the catalytic activity, after loading of the metal halide onto the catalyst and subsequent water washing and drying of the catalyst, declines to the same degree as that prior to the loading of the halide. From this, it is understood that water soluble halogen, which was extracted with water, contributes to the improvement in the activity.

By the method as previously mentioned, the oxidation catalyst can be produced. The catalyst described above can be used in the form of, for example, powder. In the meantime, in order to reduce powder scattering from the catalyst and to enable ethylene gas to readily pass through the catalyst, it is also preferable to form it into a predetermined shape.

Examples of the shape can be, for example, a granule with a particle size of approximately 0.5 mm to 6 mm, as well as the form of a pellet and a cylinder, etc.

In addition to the carrier, noble metal and halogen (a halogen element and/or a halide), the catalyst of the present invention can comprise, for example, a binder. As the binder, an inorganic porous material is preferable for maintaining the gas permeability, and as such an inorganic material, oxides such as aluminum oxide and silicon oxide, and clays such as bentonite are suitably used. In one embodiment of the present invention, the catalyst of the present invention substantially consists only of the carrier, the noble metal and the halogen (the halogen element and/or the halide), and optionally H or a metal other than noble metals.

It is also preferable to use the catalyst of the present invention, which is supported on another carrier. As such a carrier, nonwoven fabrics, papers, plastic sheets and ceramic sheets are exemplified, and metallic fins, extruded products for automotive exhaust gas catalysts and the like can also be used depending on applications. Among these, flexible materials, especially nonwoven fabrics are particularly preferable. By using a flexible carrier, the handleability during use can be improved and, by making the form during use into the roll shape, the throughput per unit volume can also be improved. The nonwoven fabric material is not particularly limited as long as it is a water insoluble material such as cellulose fibers, polyester fibers and polyamide fibers. For example, to load the catalyst on the nonwoven fabric sheet obtained by tangling fibers, a method of bonding the catalyst in powder form or the catalyst formed into granules to the nonwoven fabric with an adhesive, or a method of coating the nonwoven fabric with the catalyst together with a binder or the like can be used.

A catalyst obtained by loading platinum and subsequently the halogen (the halogen element and/or the halide) onto the carrier, as described above, exhibits a high catalytic activity in a low temperature region, as an oxidation catalyst for oxidation reactions of hydrocarbons (for example, ethylene), carbon monoxide, formaldehyde and the like. Herein, the low temperature region refers to, for example, a temperature range of 100°C or below. The catalytic activity for oxidation reactions is high even in a temperature region of 50°C or below and furthermore 25°C or below such as 10°C or below and 5°C or below. The lower limit of the temperature is not particularly limited, but it can be set at, for example, -30°C. Of course, in addition to such a low temperature region, the catalytic activity for oxidation reactions is also high in a temperature region higher than the aforementioned one.

So far, the embodiments where the noble metal is platinum, the halogen is chlorine and the substance to be oxidized is ethylene have been mainly described in detail, but the description about these embodiments also applies to other embodiments. In other words, the catalyst can be similarly produced based on the description above even in the case where the noble metal is other than platinum and even in the case where halogen is other than chlorine. Moreover, the loading amounts of the noble metal and the halogen mentioned above, and other various parameters can also be applied to the other embodiments in a similar way.

Furthermore, a substance other than ethylene can also be used as the substance to be oxidized.

In order to oxidize a gaseous hydrocarbon (for example, ethylene) or carbon monoxide using the catalyst obtained by the method described above, the hydrocarbon gas or carbon monoxide gas may be contacted with the catalyst in the presence of oxygen. The contact between the catalyst and the hydrocarbon (for example, ethylene) or carbon monoxide can be performed with, for example, a fixed bed or fluidized bed reaction apparatus. Moreover, in the case where ethylene gas is oxidized in a household refrigerator, the catalyst is placed in a part of the refrigerating space for fruits and vegetables, through which the air in the refrigerating space is allowed to circulate, thereby oxidizing ethylene and generating carbon dioxide and water vapor. This generation of carbon dioxide and water vapor is also said to be effective in view of maintaining freshness of vegetables.

Furthermore, by using the catalyst of the present invention, carbon monoxide in a reformed hydrogen gas (including a minute amount of carbon monoxide), which is employed as a fuel of fuel cell systems, can also be effectively oxidized at a low temperature region to remove carbon monoxide from the hydrogen gas. Carbon monoxide can be selectively oxidized at a low temperature region by contacting the hydrogen gas including carbon monoxide with the catalyst in the presence of oxygen, which enables utilization of the catalyst in/as an apparatus for fuel cells, for reducing the concentration of carbon monoxide.

In addition, the catalyst described above can also be utilized as a carbon monoxide sensor that detects carbon monoxide arisen by incomplete combustion in a heating unit or a water heater. Furthermore, the catalyst described above can also be utilized as an exhaust gas cleaning apparatus for internal combustion engines of automobiles because hydrocarbons and carbon monoxide can be oxidized at a low temperature region by using the catalyst.

The substance to be oxidized by the oxidation catalyst is not limited to gas, and it may be a substance in any state of solid, liquid or gas. Preferably, the substance to be oxidized is in the form of gas. In one preferred embodiment of the present invention, the substance to be oxidized is selected from the group consisting of hydrocarbon gases (more preferably, ethylene gas), carbon monoxide gas and formaldehyde gas. Whatever substance is selected as the substance to be oxidized, persons skilled in the art will be able to properly conduct oxidation of the substance by appropriately selecting a known apparatus, method and conditions, depending on the substance.

In one preferred embodiment of the present invention, the catalyst can be used to oxidize a low temperature substance (preferably, a gaseous, low temperature substance). For example, said catalyst can be used to oxidize the aforementioned substance to be oxidized, preferably a hydrocarbon gas (more preferably, ethylene gas), carbon monoxide gas or formaldehyde gas at a temperature of -30 to 100°C, preferably -20 to 50°C, and more preferably -10 to 30°C such as -5 to 25°C, -2 to 10°C or 0 to 5°C.

Accordingly, the aforementioned catalyst is a catalyst for oxidizing ethylene gas, carbon monoxide or formaldehyde at 100°C or below. In addition, in one embodiment of the present invention, the present invention comprises impregnating a carrier with a solution of a noble metal compound not containing halogen, followed by being subjected to drying and reduction treatment, and then spray-coating the resultant with a solution of halogen (typically a solution of hydrogen chloride or a solution of a metal halide). Here, the carrier can be impregnated with a solution including, based on the content of the noble metal element, 0.1 to 5% by weight of the noble metal compound relative to the total weight of the carrier and the noble metal, at a concentration of 0.1 to 10% by weight (for example, 0.2 to 10% by weight) similarly based on the content of the noble metal element. In other words, 0.1 to 5% by weight of the noble metal compound based on the content of the noble metal element, relative to the total weight of the carrier and the noble metal, can be loaded onto the carrier, by impregnating the carrier with a solution including the noble metal compound at a concentration of 0.1 to 10% by weight, based on the content of the noble metal element. The solution is preferably an aqueous solution or a nitric acid solution, and the impregnation is preferably performed, for example, at room temperature for 10 minutes to 3 hours under stirring and mixing. For example, the stirring is performed with a cement mixer. Moreover, the drying is performed, for example, at a temperature of 70 to 130°C, preferably 90 to 110°C for 30 minutes to 20 hours, preferably 1 to 10 hours such as 2 to 5 hours or 2 to 3 hours. By such impregnation and drying, it is possible to load the noble metal not containing halogen onto the carrier. Subsequently, such a carrier on which the noble metal has been supported (i.e. a noble metal-supported catalyst) can be spray-coated with a solution (preferably an aqueous solution of hydrogen chloride or an aqueous solution of a metal halide) including, based on the content of the halogen element, 0.02% by weight or more of the halogen relative to the total weight of the noble metal and the carrier, at a concentration of, for example, 0.1 to 5% by weight, preferably 0.5 to 2% by weight, similarly based on the content of the halogen element, for example, at room temperature. The spray coating apparatus is not particularly limited and, for example, a spray for pesticide application, a spray for painting or the like can be used. Preferably, after the spray-coating, drying is performed at a temperature of 80 to 150°C, preferably 90 to 130°C such as 100 to 120°C for 1 to 15 hours, preferably 3 to 12 hours, more preferably 5 to 10 hours. Preferably, the sintering is performed before the spray coating of the carrier comprising the noble metal supported thereon with the solution of the metal halide.

The present invention is described in more detail by the illustrating Examples below, but is not limited by the following Examples in any way.

Examples

(Example 1)

By pore-filling method, 10 g of a mesoporous silica carrier from Taiyo Kagaku Co., Ltd. (TMPS-4R, specific surface area: 970 $m^2$/g) was impregnated with an aqueous solution of dinitrodiammine platinum (platinum concentration of 8.5% by weight) as a raw material of platinum, dried at 100°C for 2 hours, and then sintered at 400°C for 5 hours. The loading amount of platinum at that time was 1% by weight based on the total weight of the carrier and platinum. Subsequently, hydrogen reduction was performed at 200°C for 2 hours to obtain a reduced platinum sample. Then, the sample was spray-coated with 15.2 ml of hydrochloric acid (concentration: 1.14% by weight) (using a spray for painting and a cement mixer; spray pressure: 0.3 MPa; and mixer rotational speed: 2 rpm) to further load 1.68% by weight of halogen thereon, relative to the total weight of the carrier and platinum. A catalyst of Example 1 was obtained after drying at 110°C for 8 hours. Using this catalyst of Example 1, the ethylene decomposition rate was measured by the method in Test Example 1. The result exhibits an oxidative decomposition rate of 98% (Table 1). In Table 1, the "amount of halide applied" is the charged amount, calculated from the amount adsorbed as a result of the spraying, and the "loading amount of chlorine according to ion chromatography" refers to, as mentioned later, a value obtained in the measurement with an ion chromatographic apparatus, by using halogen extracted from a catalyst sample. Either of them corresponds to the loading amount of halogen in the catalyst.

(Example 2)

Using a method similar to that in Example 1, the carrier was impregnated with an aqueous solution of dinitrodiammine platinum as a platinum source, sintered and subjected to hydrogen reduction. Then, the resulting sample was spray-coated with an aqueous solution of ferric chloride (1.52 ml, concentration: 1.4% by weight) to further load 0.21% by weight of the ferric chloride based on the content of the halogen element, relative to the total weight of the platinum and carrier. A catalyst of Example 2 was obtained after drying at 110°C for 8 hours. Using this catalyst of Example 2, the ethylene decomposition rate was measured by the method in Test Example 1. The result exhibits an oxidative decomposition rate of 43% (Table 1).

(Examples 3 to 5)

Catalysts were produced by the same method as in Example 1 except that the concentration of ferric chloride was changed, and catalysts with the loading amount of ferric chloride of 0.43, 0.84 and 1.68% by weight based on the content of the halogen element were obtained, respectively. Using the method in Test Example 1, the ethylene decomposition rate and the like were measured, and the results are shown in Table 1. In addition, Figure 1 shows results with the horizontal axis representing the loading amount of halogen and the vertical axis representing the ethylene decomposition rate.

(Examples 6 to 8)

Using the same method as in Examples 2 to 5, except that calcium chloride was used instead of ferric chloride in Example 2, catalysts with a varying loading amount of calcium chloride from 0.63 to 1.68% by weight based on the content of the halogen element were produced, and the ethylene decomposition rate, etc. was measured by the method in Test Example 1. The results are shown in Table 1. In addition, Figure 1 shows results with the horizontal axis representing the loading amount of halogen and the vertical axis representing the ethylene decomposition rate.

(Examples 9 to 12)

Using the same method as in Examples 2 to 5, except that polyaluminum chloride was used instead of ferric chloride in Example 2, catalysts with a varying loading amount of polyaluminum chloride from 0.21 to 0.84% by weight based on the content of the halogen element were produced, and the ethylene decomposition rate, etc. was measured by the method in Test Example 1. The results are shown in Table 1. In addition, Figure 1 shows results with the horizontal axis representing the loading amount of halogen and the vertical axis representing the ethylene decomposition rate.

(Test Example 1)

Using the catalysts produced in Examples 1 to 12, the following method was performed, and the results are shown in Table 1.

(1) Extraction of Chlorine on Catalyst: 0.5 g of the catalyst was placed in a beaker, and 50 ml of pure water was added thereto, followed by ultrasonic treatment for 5 minutes with an ultrasonic cleaning apparatus.
(2) Measurement of Chlorine Amount By Ion Chromatography: the aqueous extracted solution was diluted 25 times with pure water, and the chlorine concentration therein was measured with an ion chromatographic apparatus. For the measurement, an ion chromatographic apparatus from Shimadzu Corp. was used, and IC-A3 from Shimadzu Corp. was used as a column.
(3) Conditions for Evaluation of Ethylene Decomposition: 1 g of the catalyst was filled in a sachet. Ethylene and the air were mixed and 2600 ml of the mixed gas containing 100 ppm of ethylene was injected into the sachet. After leaving it at 4°C for 20 hours, the ethylene concentration was measured by gas chromatography, and the ethylene decomposition rate was calculated with the following equation.

$$\text{Ethylene Decomposition Rate (\%)} = [(\text{Initial Ethylene Gas Concentration}) - (\text{Ethylene Gas Concentration After 20 Hours})]/(\text{Initial Ethylene Gas Concentration}) \times 100 \quad \ldots\ldots (5)$$

(Comparative Example 1)

By pore-filling method, 10 g of a mesoporous silica carrier from Taiyo Kagaku Co., Ltd. (TMPS-4R, surface area: 970 $m^2$/g) was impregnated with 1.15 g of chloroplatinic acid aqueous solution containing 0.1 g of Pt metal, dried at 100°C for 2 hours, and then sintered at 400°C for 5 hours. Subsequently, hydrogen reduction was performed at 200°C for 2 hours. Then, without loading the halogen with e.g. hydrochloric acid or an aqueous solution of calcium chloride, the ethylene decomposition rate was measured by the method in Test Example 1. The results are shown in Table 1.

(Comparative Example 2)

A sample catalyst of Comparative Example 2 was produced by the method and conditions in Example 2, except that dinitrodiammine platinum was used as a platinum precursor and loading of ferric chloride was not performed. Next, the evaluation of the catalyst was performed by the method in Test Example 1, and the results are shown in Table 1.

(Comparative Example 3)

A sample was produced by loading platinum onto the carrier and then loading halogen by the same method as in Example 7. The sample was further subjected to washing with water to remove chlorine, followed by drying. The Comparative Example 3 sample was evaluated by the method in Test Example 1. The results are shown in Table 1.

(Comparative Example 4)

A sample catalyst of Comparative Example 4 was produced by loading platinum onto the silica carrier by the same method as in Example 1, and then using the same method and conditions as Example 1, except that the resultant was treated with pure water not containing halogen, instead of being treated with hydrochloric acid or being impregnated with the ferric chloride solution. The evaluation of the catalyst was performed by the method in Test Example 1. The results are shown in Table 1.

(Example 13)

By the same method as in Example 2, a catalyst sample for oxidation of carbon monoxide was produced. Instead of the ethylene gas in Example 1, a simulated reaction gas (mixed gas with 1.0% of carbon monoxide, 5.0% of nitrogen, 1.0% of oxygen and the balance of hydrogen) was introduced at 3000 h$^{-1}$ using a mass flow meter to carry out oxidation reaction of carbon monoxide. The carbon monoxide concentration at the exit of a reaction tube in the carbon monoxide selective oxidation reaction at room temperature (25°C) was measured by a gas chromatograph on which a TCD (thermal conductivity detector) was mounted as a detector, and it was confirmed that carbon monoxide was decreased to 10 ppm or less.

(Comparative Example 5)

Using a catalyst sample produced under the same conditions as in Comparative Example 2, measurement was performed by the same method and conditions as in Example 13. The carbon monoxide concentration was found to be greater than 100 ppm.

(Example 14)

Using the same method as in Example 2, a catalyst sample was produced. Instead of the ethylene gas in Example 1, formaldehyde and the air were mixed, and 2600 ml of the mixed gas containing 400 ppm of formaldehyde was injected into a sachet. After resting it at room temperature (25°C) for 3 hours, the formaldehyde concentration was measured by detector tube method. The formaldehyde decomposition rate was calculated with the following equation. The oxidative decomposition rate was shown to be 98%.

$$\text{Formaldehyde Decomposition Rate (\%)} = [(\text{Initial Formaldehyde Gas Concentration}) - (\text{Formaldehyde Concentration After 3 Hours})]/(\text{Initial Formaldehyde Concentration}) \times 100 \quad \text{...... (6)}$$

From the results described above, the following can be derived.

1) While the catalyst obtained by loading dinitrodiammine platinum (DNDA-Pt) onto the mesoporous silica and sintering the resultant, without subsequent loading of chlorine, has a low ethylene decomposition activity of 35% (Comparative Example 2), the catalyst sample of Example 1 on which hydrochloric acid was further loaded has an extremely high ethylene decomposition rate of 98%. Loading the metal halide similarly improved the activity of the catalyst.

2) The catalyst sample obtained by washing the sample, on which chlorine has been loaded, with water to remove the chlorine (Comparative Example
3) has a low decomposition activity similar to that of Comparative Example 2 obtained without the loading of chlorine. This indicates that water soluble chlorine promotes the ethylene decomposition reaction.

3) The sample of Comparative Example 4 that was treated with pure water instead of chlorine, has a significantly lower activity compared to that of Example 1 on which chlorine has been loaded. From this, it was confirmed that the aforementioned effects achieved after the treatment for loading chlorine are caused by chlorine ions rather than by water.

4) As can be seen from Figure 1, if the amount of halogen in the solution used for the treatment for loading halogen is zero (100% water), the activity will be low, and as the loading amount of halogen increases from 0.2% by weight or more, 0.4% by weight or more, to 0.6% by weight or more, the activity is raised greatly. Then, when the loading amount of halogen exceeds 1.6% by weight, the activity tends to decline. Considering crystal precipitation of ferric chloride or the like, it can be said that the upper limit of the loading amount of halogen is preferably 5% by weight or less.

5) From the results of Example 13 (carbon monoxide) and Example 14 (formaldehyde), the catalyst obtained by the method according to the present invention was shown to be effective not only for hydrocarbons such as ethylene, but also for a wide variety of substances such as carbon oxides and aldehydes.

[Table 1]

| Examples | Carrier | Platinum source | Loading amount based on the content of the platinum (relative to 100, total weight of carrier and platinum) Amount [wt%] | Halogen treatment solution | Amount of halide applied [wt%] | Platinum particle size [nm] | Loading amount of chlorine according to ion chromatography [wt%] | Ethylene decomposition performance [%] | Note |
|---|---|---|---|---|---|---|---|---|---|
| Examples 1 | TMPS | DNDA-Pt | 1.0 | HCl | 1.68 | 1.2-2 | - | 98 | Weak halogen smell |
| Examples 2 | IMPS | DNDA-Pt | 1.0 | $FeCl_3$ | 0. 21 | 1.2-2 | - | 43 | |
| Examples 3 | TMPS | DNDA-Pt | 1.0 | $FeCl_3$ | 0.43 | 1.2-2 | - | 67.5 | |
| Examples 4 | TMPS | DNDA-Pt | 1.0 | $FeCl_3$ | 0.84 | 1.2-2 | - | 97 | |
| Examples 5 | TMPS | DNDA-Pt | 1.0 | $FeCl_3$ | 1.68 | 1.2-2 | - | 90 | |
| Examples 6 | TMPS | DNDA-Pt | 1.0 | $CaCl_2$ | 0.63 | 1.2-2 | - | 90 | |
| Examples 7 | TMPS | DNDA-Pt | 1.0 | $CaCl_2$ | 0.84 | 1.2-2 | - | 94 | |
| Examples 8 | TMPS | DNDA-Pt | 1.0 | $CaCl_2$ | 1.68 | 1.2-2 | - | 92 | |
| Examples 9 | TMPS | DNDA-Pt | 1.0 | $[Al_2(OH)_3Cl_3]_n$ | 0.21 | 1.2-2 | - | 41 | |
| Examples 10 | TMPS | DNDA-Pt | 1.0 | $[Al_2(OH)_3Cl_3]_n$ | 0.42 | 1.2-2 | - | 61 | |
| Examples 11 | TMPS | DNDA-Pt | 1.0 | $[Al2(OH)_3Cl_3]_n$ | 0.63 | 1.2-2 | - | 85 | |
| Examples 12 | TMPS | DNDA-Pt | 1.0 | $[Al_2(OH)_3Cl_3]_n$ | 0.84 | 1.2-2 | - | 72 | |
| Comparative Example 1 | TMPS | Chloroplatinic acid | 1.0 | - (Absent) | - (Absent) | 1.2-2 | 0.2 | 98 | Strong halogen smell upon sintering |
| Comparative Example 2 | TMPS | DNDA-Pt | 1.0 | - (Absent) | - (Absent) | 1.2-2 | - | 35 | |

16

(continued)

| Examples | Carrier | Platinum source | Loading amount based on the content of the platinum (relative to 100, total weight of carrier and platinum) Amount [wt%] | Halogen treatment solution | Amount of halide applied [wt%] | Platinum particle size [nm] | Loading amount of chlorine according to ion chromatography [wt%] | Ethylene decomposition performance [%] | Note |
|---|---|---|---|---|---|---|---|---|---|
| Comparative Example 3 | TMPS | DNDA-Pt | 1.0 | CaCl$_2$ | 0.48 (Water washing after applied) | 1.2-2 | - | 15 | |
| Comparative Example 4 | TMPS | DNDA-Pt | 1.0 | - (Absent) | - (Water applied) | 1.2-2 | - | 11 | |

**Claims**

1. A method for producing a low temperature oxidation catalyst, comprising steps of:

   (1) loading a noble metal compound not containing halogen onto a carrier;
   (2) reducing the noble metal compound on the carrier obtained in step (1);
   (3) loading a halide onto the carrier obtained in step (2); and
   (4) drying the carrier obtained in step (3) to obtain the low temperature oxidation catalyst.

2. The method according to claim 1, wherein, in step (1), the noble metal compound not containing halogen is loaded onto the carrier by impregnating the carrier with a solution of the noble metal compound not containing halogen and then drying the resulting carrier.

3. The method according to claim 1, wherein, in step (3), the halide is further loaded onto the carrier obtained in step (2), by treating said carrier with a solution of the halide.

4. The method according to claim 3, wherein, in step (3), the halide is further loaded onto the carrier obtained in step (2), by spray-coating said carrier with a solution of the halide.

5. The method according to claim 1, wherein the noble metal is at least one element selected from the group consisting of platinum, gold, palladium, ruthenium, rhodium and iridium.

6. The method according to claim 1, wherein the noble metal compound not containing halogen in step (1) is dinitrodiammine platinum.

7. The method according to claim 1, wherein the halogen in the halide is chlorine.

8. The method according to claim 3, wherein the solution of the halide is an aqueous solution of hydrogen chloride.

9. The method according to claim 3, wherein the solution of the halide is a solution of a chloride of a metal other than noble metals.

10. The method according to claim 9, wherein the metal chloride is one or more metal chlorides selected from the group consisting of alkali metal chlorides, alkaline earth metal chlorides, transition metal chlorides and chlorides of Group XIII elements except boron.

11. The method according to claim 10, wherein a metal in the metal chloride is one or more elements selected from the group consisting of calcium, magnesium, iron and aluminum.

12. The method according to claim 1, further comprising, between steps (1) and (2), a step of:
    (1-a) heating the carrier comprising the noble metal compound not containing halogen supported on said carrier.

13. The method according to claim 1, wherein the reduction in step (2) is hydrogen reduction.

14. The method according to claim 1, wherein, as the carrier, a silica-containing carrier, the silica content of which is 70% by weight or more based on the total weight of the carrier, is used.

15. The method according to claim 14, wherein the carrier has a specific surface area of 300 m$^2$/g to 2000 m$^2$/g.

16. The method according to claim 14, wherein the carrier comprises silica produced by sol-gel method.

17. The method according to claim 14, wherein the carrier comprises silica gel or mesoporous silica.

18. The method according to claim 1, wherein the loading amount of the noble metal is 0.1 to 5% by weight based on the content of the noble metal element, relative to the total weight of the carrier and the noble metal.

19. The method according to claim 1, wherein the loading amount of the halide is 0.02% by weight or more based on the content of the halogen element, relative to the total weight of the carrier and the noble metal.

**20.** The method according to claim 2, wherein, in step (1), 0.1 to 5% by weight of the noble metal compound based on the content of the noble metal element, relative to the total weight of the carrier and the noble metal, is loaded onto the carrier by impregnating the carrier with a solution containing the noble metal compound at a concentration of 0.05 to 10% by weight based on the content of the noble metal element.

**21.** The method according to claim 3, wherein, in step (3), 0.02% by weight or more of halogen based on the content of the halogen element, relative to the total weight of the carrier and the noble metal, is loaded onto the carrier obtained in step (2) by spray-coating said carrier with a solution containing the halide at a concentration of 0.1 to 5% by weight based on the content of the halogen element.

[Figure 1]

Figure 1. LOADING AMOUNT OF HALOGEN AND ETHYLENE OXIDATIVE
DECOMPOSITION RATE

<table>
<tr><td colspan="2" align="center">**INTERNATIONAL SEARCH REPORT**</td><td>International application No.<br>PCT/JP2017/045857</td></tr>
</table>

**A. CLASSIFICATION OF SUBJECT MATTER**
Int.Cl. B01J37/02(2006.01)i, B01D53/86(2006.01)i, B01J27/13(2006.01)i,
B01J27/138(2006.01)i, B01J37/08(2006.01)i, B01J37/18(2006.01)i

According to International Patent Classification (IPC) or to both national classification and IPC

**B. FIELDS SEARCHED**

Minimum documentation searched (classification system followed by classification symbols)
Int.Cl. B01J37/02, B01D53/86, B01J27/13, B01J27/138, B01J37/08, B01J37/18

Documentation searched other than minimum documentation to the extent that such documents are included in the fields searched
Published examined utility model applications of Japan 1922–1996
Published unexamined utility model applications of Japan 1971–2018
Registered utility model specifications of Japan 1996–2018
Published registered utility model applications of Japan 1994–2018

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2009-61372 A (TAIYO KAGAKU CO., LTD.) 26 March 2009, claims, paragraphs [0026]–[0039] (Family: none) | 1–21 |
| A | FUKUOKA, Atsushi et al., Preferential oxidation of carbon monoxide catalyzed by platinum nanoparticles in mesoporous silica, Journal of the American Chemical Society, 31 July 2007, vol. 129, no. 33, pp. 10120–10125 | 1–21 |
| A | JP 2012-55826 A (NATIONAL INSTITUTE OF ADVANCED INDUSTRIAL SCIENCE & TECHNOLOGY) 22 March 2012, claims, examples (Family: none) | 1–21 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>13 March 2018 | Date of mailing of the international search report<br>27 March 2018 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2017/045857

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2012-81458 A (TOKYO METROPOLITAN UNIV) 26 April 2012, claims, examples (Family: none) | 1-21 |
| A | JP 54-80292 A (MATSUSHITA ELECTRIC INDUSTRIAL CO., LTD.) 26 June 1979, claims, page 1, left column, lines 11-13, page 2, lower left column, line 10 to page 3, upper right column, line 18 (Family: none) | 1-21 |
| A | JP 58-207947 A (GOSEI KAGAKU KENKYUSHO KK) 03 December 1983, claims, page 1, left column, lines 18-20, page 2, upper right column, lines 4-13, page 2, lower right column, lines 8-16, page 3, lower right column, lines 5-10, examples 2-5 (Family: none) | 1-21 |
| A | JP 2013-198875 A (NIPPON SHOKUBAI CO., LTD.) 03 October 2013, claims, paragraph [0012], examples (Family: none) | 1-21 |
| A | JP 2002-320855 A (SCIENTIFIC DESIGN CO., INC.) 05 November 2002, claims, paragraph [0018], examples (Family: none) | 1-21 |
| A | WO 2011/142481 A1 (UNIVERSITY OF YAMANASHI) 17 November 2011, claims, examples & US 2013/0071318 A1, claims, examples | 1-21 |
| A | US 3041272 A (SINCLAIR REFINING COMPANY) 26 June 1962, claims, examples (Family: none) | 1-21 |

Form PCT/ISA/210 (continuation of second sheet) (January 2015)

**EP 3 560 590 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003164764 A
- JP 2009061372 A
- JP 4062053 B

**Non-patent literature cited in the description**

- *Angew. Chem. Int. Ed.,* 2013, vol. 52, 6253-6268

**23**